# EUROPÄISCHE PATENTSCHRIFT

(11) **EP 1 211 498 B1**
(45) Veröffentlichungstag und Bekanntmachung des Hinweises auf die Patenterteilung: **08.09.2004**
(21) Anmeldenummer: 01128085.6
(22) Anmeldetag: 27.11.2001
(51) Int. Cl.: G01L 23/00, G01L 19/00, F02C 7/00

(54) **Sonde zur Messung von Druckschwingungen**
Probe for measuring pressure vibrations
Sonde pour mesurer des vibrations de pression

(30) Priorität: 01.12.2000 DE 10059701
(43) Veröffentlichungstag der Anmeldung: 05.06.2002
(73) Patentinhaber: ALSTOM Technology Ltd, 5400 Baden (CH)
(72) Erfinder: Brehm, Armin, 5415 Nussbaumen (CH); Evers, Wolfgang, 5415 Nussbaumen (CH); Wetter, Hugo, 5033 Buchs (CH); Zinn, Hanspeter, 5406 Baden-Rütihof (CH)

(56) Entgegenhaltungen:
- GB-A- 2 037 993
- US-A- 6 053 048
- PATENT ABSTRACTS OF JAPAN vol. 1995, no. 02, 31. März 1995 (1995-03-31) & JP 06 331146 A (TOSHIBA CORP), 29. November 1994 (1994-11-29)

## Beschreibung

### Technisches Gebiet

Die vorliegende Erfindung betrifft eine Sonde zur Messung von Druckschwingungen. Sie betrifft insbesondere Sonden zur Messung von Druckschwingungen in Brennkammern von Gasturbinen. Sie betrifft weiterhin die Verwendung von erfindungsgemässen Sonden.

### Stand der Technik

In den Brennkammern moderner Gasturbinen auftretende Druckschwingungen, sogenannte Brennkammerpulsationen oder Verbrennungspulsationen, oft einfach als Pulsationen bezeichnet, geben gerade bei Einsatz der Vormischbrennertechnologie wichtige Hinweise auf die Qualität der Verbrennung. Unter ungünstigen Bedingungen können die Brennkammerpulsationen Amplituden erreichen, bei denen die mechanische Integrität von Gasturbinenkomponenten gefährdet ist. Auf eine permanente Überwachung von Brennkammerdruckschwingungen kann daher im Grunde nicht mehr verzichtet werden. Eine unmittelbare Detektion der auftretenden Druckschwingungen erfordert aufgrund der hohen Temperaturen hochtemperaturfeste Druckaufnehmer, welche einerseits sehr teuer sind, andererseits mit so extremen Einsatzbedingungen konfrontiert werden, dass im Dauerbetrieb eine erhebliche Versagenswahrscheinlichkeit besteht. Daneben ist auch bekannt, dass derartige Aufnehmer eine Temperaturabhängigkeit der Sensorkennlinie aufweisen, was weiterhin die Quantifizierung der gemessenen Druckschwingungen erschwert, oder nur mit einer eingeschränkten Genauigkeit ermöglicht. Um die Aufnehmer nicht exzessiven Temperaturen auszusetzen, werden sie mittels eines Adapters ein Stück von der Brennkammerwand zurückversetzt. Ein solcher Adapter aber weist wiederum ein Resonanzverhalten auf, welches das akustische Signal beeinflusst.

Analoge Aufgabenstellungen mit den identischen Problemen bei der Realisierung einer Messeinrichtung ergeben sich selbstverständlich auch in anderen Brennräumen und Heissgasströmungen.

Es ist daher bekannt, sogenannte Long-Line Sonden einzusetzen. Bei diesen ist die eigentliche Messstelle innerhalb der Gasturbinenbrennkammer mittels einer Leitung, im Grunde genommen mittels eines Röhrchens, mit einem ausserhalb der Brennkammer angeordneten Drucktransmitter verbunden. Dies ermöglicht es, den Transmitter bei wesentlich geringeren Temperaturen einzusetzen. Damit können wesentlich preisgünstigere Drucktransmitter oder Mikrophone eingesetzt werden, deren Lebensdauer und Messgenauigkeit nicht durch extreme Einsatzbedingungen eingeschränkt wird. Bei einer solchen Konfiguration ist es wichtig, einen echofreien Abschluss der so gebildeten Messleitung zu gewährleisten, und auch innerhalb der Messleitung möglichst jede Art von Reflexionen zu vermeiden. Bekannt ist der Abschluss der Messrohres durch ein semi-infinites Rohr. Dies wird durch eine Leitung grosser Länge realisiert, welche an einem ersten Ende mit dem der Messstelle abgewandten Ende des Messrohres verbunden ist. Innerhalb des semi-infiniten Rohres werden bei hinreichender Länge die Druckschwingungen aufgrund innerer Dissipation derart gedämpft, dass keine nennenswerte Amplitude mehr am zweiten Ende des semi-infiniten Rohres reflektiert wird. Das zweite Ende des semi-infiniten Rohres wird nach dem Stand der Technik entweder einfach verschlossen, um Heissgasleckagen zu vermeiden. Nachteilig hieran ist, dass die gesamte Messvorrichtung mit heissen und aggressiven Verbrennungsgasen gefüllt wird, und der Transmitter wiederum erhöhten Belastungen ausgesetzt ist. Daneben sind bis anhin bekannte Long-Line Sonden mit den angehängten semi-infiniten Leitungen in der Praxis eher schwer zu handhabende Gebilde, da der derzeitige Stand der Technik keine Lösung anbietet, das semi-infinite Rohr als integralen Bestandteil der Sonde auszuführen.

US-A-6,053,048 zeigt eine Sonde zum Messen von Druckschwankungen in der Brennkammer einer Gasturbine, bei der ein von Endreflexionen weitgehend freies langes Messrohr von der Brennkammer in den Aussenraum geführt ist. Dort ist ein Druckaufnehmer angeschlossen. Das messstellenferne Ende des Messrohrs ist an das Plenum der Turbine angeschlossen.

Es ist aus dem Stand der Technik also keine Lösung bekannt, bei der zur Messung von Druckschwingungen in Brennräumen eine leicht handhabbare, robuste und kompakte Sonde zur Verfügung steht, bei der der Drucktransmitter von der eigentlichen, thermisch belasteten Messstelle entfernt angeordnet ist.

### Darstellung der Erfindung

Hier will die Erfindung Abhilfe schaffen. Ziel der Erfindung, wie sie in den Ansprüchen gekennzeichnet ist, ist, eine sogenannte Long-Line Sonde zur Messung von Druckschwingungen in Brennräumen anzugeben, welche leicht handhabbar, kompakt und robust ist. Ein weiteres Kriterium ist, die erfindungsgemässe Sonde in einem Frequenzbereich von 0 Hz bis 10 kHz einsetzen zu können, ohne dass dabei eine signifikante Verfälschung der Signale aufgrund von Resonanzen auftritt. Im Interesse der Handhabbarkeit soll die Sonde ein kompaktes Modul darstellen. Alle gegebenenfalls benötigten Versorgungsleitungen sollen in dieser Sonde integriert sein, auch, um die Beschädigungsgefahr externer Anschlussleitungen soweit wie möglich zu vermeiden. Die Sonde soll für einen wartungsfreien Dauereinsatz von mehreren 10000 Betriebsstunden geeignet sein. Im Falle einer eventuellen Beschädigung muss ein einfacher schneller Ersatz des gesamten Sondenmoduls möglich sein.

Erreicht wird dies durch eine Sonde, welche die folgenden Elemente beinhaltet:
- ein inneres, als Messrohr fungierendes Rohr, welches ein messstellenseitiges und ein transmitterseitiges Ende aufweist;
- ein Mantelrohr, welches wenigstens bereichsweise um das Messrohr herum angeordnet ist, und wobei zwischen einer Aussenwand des Messrohres und einer Innenwand des Mantelrohres ein einseitig offener Mantelraum ausgebildet ist;
- einen Drucktransmitter, welcher im Bereich des transmitterseitigen Endes des Messrohres mit dem Inneren des Messrohres in Verbindung steht;
- ein semi-infinites Rohr, welches an einem ersten Ende mit dem transmitterseitigen Ende des Messrohres verbunden ist, und welches an einem zweiten Ende mit dem Mantelraum verbunden ist;
wobei des semi-infinite Rohr als eine um das Messrohr und/oder das Mantelrohr angeordnete Wicklung ausgeführt ist.

In einer vorteilhaften Ausgestaltung ist das Messrohr an seiner Aussenwand mit einer Wärmeisolierung versehen. Durch diese Massnahme werden Temperaturgradienten innerhalb des Messrohres, welche das Messergebnis beeinflussen könnten, weitestgehend vermieden.

Die Ausführung des semi-infiniten Rohres als Wicklung um ein eigentliches Sondenrohr herum gewährleistet eine kompakte Bauweise. Weiterhin kann über das Mantelrohr ein robuster Anschluss für ein Spülgas vorgesehen werden. Dies ermöglicht es, das semi-infinite Rohr und das Messrohr mit einem Spülgas zu spülen, wodurch das Eindringen von Verbrennungsgasen in die eigentliche Messtechnik verhindert wird. Das Spülgas trägt weiterhin dazu bei, das Auftreten von Temperaturgradienten im Messrohr zu vermeiden.

Die Länge des semi-infiniten Rohres liegt bevorzugt bei mehr als 7000 Durchmessern, um eine hinreichende Reflexionsfreiheit zu erreichen. Vorteilhafte Ausführungen weisen Rohrlängen über 40 m, beispielsweise 50 m auf. In diesem Zusammenhang ist es auch sehr von Vorteil, wenn das semi-infinite Rohr den gleichen Innendurchmesser wie das Messrohr aufweist, um hier störende Nahtstellen zu vermeiden, welche wiederum zu Reflexionen mit Echo-Erscheinungen führen würden. Diese Innendurchmesser werden ganz besonders vorteilhaft im Bereich von 4 bis 10 mm, insbesondere um 6 mm, gewählt.

Ein echofreier oder zumindest echoarmer Abschluss der Messeinrichtung kann bei Bedarf zusätzlich verbessert werden, wenn am zweiten Ende des semi-infiniten Rohres eine Blende angeordnet wird. Der Blendendurchmesser wird bevorzugt im Bereich von 1,5 bis 2 mm gewählt.

Wie erwähnt, wird der Mantelraum mit Vorteil mit einer Spülgasversorgung verbunden. Eine permanente Spülgasversorgung ist zu bevorzugen.

Die Strömung des Spülgases wird bevorzugt so eingestellt, dass die Strömungsgeschwindigkeit im Messrohr unter 3 m/s liegt.

Die erfindungsgemässe Sonde eignet sich ganz besonders zum Einsatz in Gasturbinen, wobei das messtellenseitige Ende des Messrohres in eine Brennkammer der Gasturbine offen ist. Der Mantelraum wird bevorzugt mit dem Brennkammerplenum der Gasturbine verbunden; damit ist die Spülluftversorgung sichergestellt, solange die Gasturbine im Betrieb ist, und der Druck der Spülluft liegt um rund 1 bar höher als der Brennkammerdruck, der am messstellenseitigen Ende der Sonde herrscht. Daraus resultiert ein inhärent sicheres System, und das Eindringen von heissen Verbrennungsgasen in die Sonde und somit der Kontakt von Heissgas mit dem Drucktransmitter wird zuverlässig unterbunden. Die Spülluft wird bei dieser Ausführung in einer modernen Gasturbine mit einer Temperatur um 350 - 400°C oder noch höher zur Verfügung gestellt. Besonders vorteilhaft wird die gesamte Konfiguration dann so ausgelegt, dass die Spülluft sich beim Durchströmen des semi-infiniten Rohres auf einen Bereich von etwas über 100°C - beispielsweise 120°C - bis rund 200°C abkühlt, wobei insbesondere Temperaturen beim Eintritt der Spülluft in das Messrohr von 150°C bis 180°C angestrebt werden. Dieser Temperaturbereich hat den Vorteil, dass einerseits Kondensation vermieden wird, andererseits aber ein Drucktransmitter, dessen obere zulässige Einsatztemperatur beispielsweise mit 200°C spezifiziert ist, problemlos eingesetzt werden kann. Hierzu kann der Wicklungsträger mit Durchlüftungsöffnungen versehen werden. Diese Öffnungen gewährleisten, dass Umgebungsluft die Wicklung durchströmen und das semi-infinite Rohr umströmen kann, wodurch innerhalb des semi-infiniten Rohres strömendes Medium abgekühlt wird.

Bei der Verwendung in Gasturbinen ist es bekannt, die mittels der Sonde gemessenen Pulsationswerte für Regel- und Schutzeingriffe heranzuziehen. So kann bei Überschreiten eines zulässigen oberen Wertes eine Notabschaltung oder ein Schutzentlasten der Maschine ausgelöst werden, oder es können in Abhängigkeit von gemessenen Brennkammerpulsationen Eingriffe auf bestimmte Verbrennungsparameter, wie die Steuerung von Vormischbrennem oder einer Wassereinspritzung, vorgenommen werden.

Selbstverständlich kann die erfindungsgemässe Sonde auch an anderen Brennräumen und Heissgasströmungen sehr gut eingesetzt werden.

### Kurze Beschreibung der Zeichnung

Im Folgenden wird die Erfindung anhand der Zeichnung näher erläutert. Im Einzelnen zeigen
Fig. 1 eine erfindungsgemäss ausgeführte Sonde;
Fig. 2 ein Beispiel für die Verwendung einer erfindungsgemässen Sonde an einer Gasturbine;
Fig. 3 eine Detaildarstellung eines echofreien Abschlusses des semi-infiniten Rohres.

Alle Figuren sind lediglich instruktiv zu verstehen, und dienen keinesfalls zur Einschränkung des in den Ansprüchen gekennzeichneten Schutzumfangs.

### Weg zur Ausführung der Erfindung

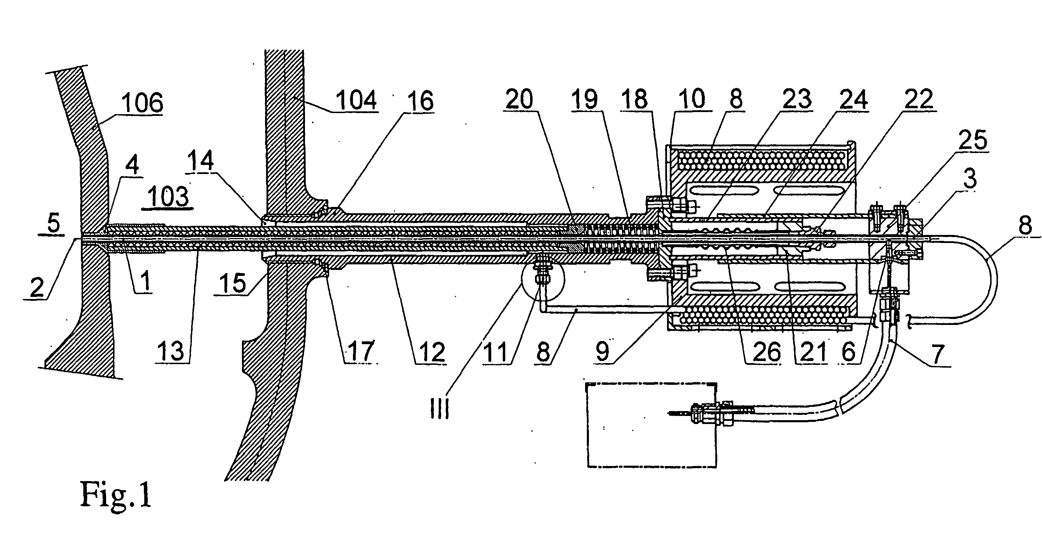

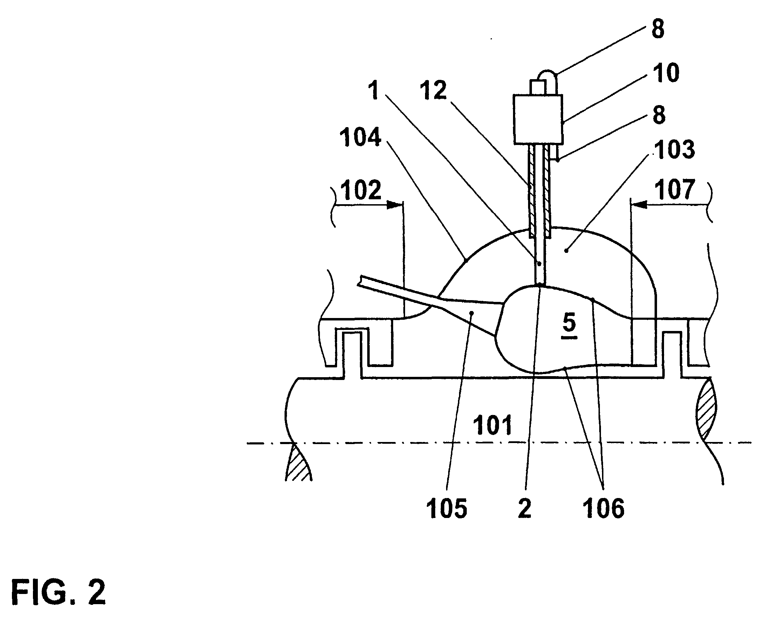

Die in Figur 1 dargestellte Sonde weist ein Messrohr 1 mit einem messstellenseitigen Ende 2 und einem transmitterseitigen Ende 3 auf. Am messstellenseitigen Ende des Messrohres ist ein Konussitz 4 angeordnet, wobei selbstverständlich auch andere dem Fachmann geläufige gasdichte Arten des Sitzes, beispielsweise ein Kugelsitz, Verwendung finden können. Die Öffnung des Messrohres gegen den Brennraum ist scharfkantig, mit einem abrupten und unstetigen Übergang, ausgeführt. Diese Ausführung bietet eine bessere Akustik als ein abgerundeter oder konischer Übergang. Beim Einbau der Sonde, der unten in Verbindung mit Figur 2 im grösseren Zusammenhang beispielhaft erläutert wird, wird der Sitz 4 mit einer Kraft gegen einen Stutzen des Messraumes 5 gedrückt, und dichtet so den Sitz 4 am messstellenseitigen Ende des Messrohres mit der notwendigen Messstellenöffnung gasdicht ab. Am transmitterseitigen Ende 3 des Messrohres 1 ist ein Drucktransmitter 6 angeordnet, der den Druck im Messrohr misst. Der Drucktransmitter ist dabei bevorzugt mit möglichst kleinen Abmessungen zu wählen, und er ist bevorzugt so an einer radial äusseren Wand des Messrohres anzuordnen, dass die glatte Wandoberfläche im Inneren des Messrohres möglichst wenig durch Stufen gestört wird. Als Transmitter kommt beispielsweise ein piezoelektrischer Transmitter oder ein Probenmikrophon in Frage; es ist dabei von Vorteil, wenn der Drucktransmitter selbst AC-gekoppelt ausgeführt ist, also bei konstantem Druck kein Signal abgibt. Dies hat den Vorteil, dass Messsignale, die von Druckschwankungen mit Amplituden im mbar-Bereich ausgelöst werden, bei Absolutdrücken von beispielsweise 30 bar nicht im Rauschen oder in dem hohen Gleichanteil des Signals verschwinden. Die Funktionsweise der erfindungsgemässen Sonde, soweit bis jetzt beschrieben, ist prinzipiell die, dass ein Druck, der in einem Raum 5 herrscht, in welchen das Messrohr an seinem messstellenseitigen Ende mündet, dem Inneren des Messrohres aufgeprägt wird. Damit werden auch die Druckschwankungen im Messraum 5 dem Messrohr-Inneren aufgeprägt und vom Drucktransmitter 6 aufgenommen. Bevorzugt Druckschwankungen mit Frequenzen von einigen Hz bis zu einigen kHz, grob im akustischen Bereich, werden in elektrische Signale umgewandelt. Die Amplitude der zu erfassenden Druckschwankungen liegt in einer Grössenordnung von einigen 10⁻³ bis zu einigen 10⁻² des Absolutdruckes, was den Vorteil einer Unterdrückung des Gleichanteils des Druckes bei der Signalwandlung unterstreicht. Das vom Transmitter generierte elektrische Signal wird über ein Signalkabel 7 - hierbei kommen speziell abgeschirmte Kabel zum Einsatz - an eine nicht dargestellte Messwerterfassungselektronik weitergeleitet, und kann dort auf unterschiedliche an sich bekannte Arten aufbereitet und weiterverarbeitet werden. Die Funktion dieser Sonde würde durch eventuell auftretende Echos vom Abschluss der Messrohres empfindlich gestört werden. Um dies zu vermeiden, ist am transmitterseitigen Ende des Messrohres ein semi-infinites Rohr angeordnet. Es handelt sich dabei um eine nahtlos gefertigte Leitung von grosser Länge, bevorzugt mehr als 40 m, beispielsweise 50m, oder auch länger. Der Innendurchmesser des Rohres ist möglichst genau, wenn irgend möglich mit einer verschwindenden Toleranz, mit dem Innendurchmesser des Messrohres identisch, der als günstiges Mass bei 4 bis 8 mm, insbesondere 6 mm, liegt. Diese Massgenauigkeit und eine sorgfältigste Fertigung gewährleisten einen praktisch nahtlosen Übergang vom Messrohr in das semi-infinite Rohr. Damit wird das Entstehen von Reflexions-Erscheinungen an der Übergangsstelle vermieden. Das semi-infinite Rohr wird als semi-infinit bezeichnet, weil über diese grosse Länge, bei den angegebenen Rohr-Innendurchmessern die zu messenden Druckschwankungen - im Grunde genommen Schallwellen - dissipiert werden, und somit am Ende des semi-infiniten Rohres nicht mehr reflektiert werden können. Akustisch wirkt das semi-infinite Rohr in dieser Richtung also tatsächlich als unendliches Rohr. Im praktischen Anlageneinsatz erweist sich bei bislang eingesetzten Long-Line Sonden die Handhabung des langen Rohres als extrem problematisch. Die Erfahrung zeigt, dass Bauteile, die nicht sehr kompakte Einheiten bilden, aus dem Weg geräumt oder betreten werden, und, dass hier im Dauereinsatz grundsätzlich mit einer eher ruppigen Behandlung zu rechnen ist. Dies ist bei einer als semi-infinites Rohr konzipierten Leitung aber kritisch. Eine solche Leitung mit einem Innendurchmesser von beispielsweise 6 mm und einer angemessenen Wandstärke erhält sehr leicht einen Knick oder andere Beschädigungen an der Innenwand, was in der Folge zu unerwünschten Reflexionen von Druckschwingungen führt. Im Sinne der Erfindung ist die Sonde daher mit einem Wicklungsträger 9 versehen, der einen integralen Bestandteil der Sonde darstellt. Das semi-infinite Rohr 8 ist als Wicklung auf diesem Wicklungsträger angeordnet. Zusätzlich ist diese Wicklung von einem Schutzmantel 10 abgedeckt. Dies gewährleistet die Integrität des semi-infiniten Rohres auch dann, wenn die eingebaute Sonde von Montage- und Wartungspersonal betreten wird. An einem zweiten Ende 11 ist das semi-infinite Rohr mit einer Spülgasversorgung verbunden. Die konstruktive Ausführung der Spülgasversorgung wirft im praktischen Einsatz ganz ähnliche Probleme auf wie das semi-infinite Rohr: Um die mechanische Integrität sicherzustellen, darf die Spülgasversorgung nicht freifliegend" verlegt sein, sondern muss in eine kompakte Einheit integriert sein. Dies ist erfindungsgemäss gelöst, indem um das Messrohr herum ein Mantelrohr 12 angeordnet ist. Zwischen dem Messrohr 1 oder einem das Messrohr ummantelnden Isoliermaterial 13 und dem Mantelrohr 12 ist ein Mantelraum 14 ausgebildet. In diesen Mantelraum kann Spülgas eingeleitet werden, welches dann durch das semi-infinite Rohr und das Messrohr in Richtung des messstellenseitigen Endes des Messrohres strömt. Dies verhindert das Eindringen von heissen und aggressiven Verbrennungsgasen in das Messrohr und den Kontakt des Transmitters mit den Verbrennungsgasen. Damit werden nur geringe Anforderungen an die Temperatur- und Korrosionsbeständigkeit des Transmitters gestellt. Weiterhin gewährleistet die permanente Strömung des Spülgases eine weitgehend konstante Temperatur im Inneren des Messrohres über dessen Länge.

Im Zusammenhang mit der Spülgasversorgung erfüllt der Wicklungsträger 9 eine weitere Funktion. Wie oben bereits dargestellt, kann es in der Praxis durchaus vorkommen, dass Spülgas mit einer Ausgangstemperatur von beispielsweise rund 400°C zur Verfügung gestellt wird. In diesem Zusammenhang wird der Wicklungsträger 9 mit Öffnungen versehen, welche eine freie Zirkulation von Luft um die Wicklungen des semi-infiniten Rohres 8 gewährleisten. Diese Luftzirkulation wird gezielt eingesetzt, um das innerhalb des semi-infiniten Rohres strömende Spülgas auf eine gewünschte Temperatur von zum Beispiel 150°C bis 200°C abzukühlen, bevorzugt auf beispielsweise 180°C. Prinzipiell wäre es auch vorstellbar, die Grösse der Durchlüftungsöffnungen verstellbar zu gestalten, um so eine Regelung der Spülgastemperatur beim Eintritt in das Messrohr zu implementieren.

Zur weiteren Erläuterung der Funktion und der weiteren Bestandteile der Sonde sei zunächst auf Fig. 2 verwiesen. Die Figur zeigt einen Teil einer Gasturbine im Längsschnitt. Dabei sind nur die für das unmittelbare Verständnis erforderlichen Einzelheiten gezeigt. Die Funktion des Rotors 101 mit den Laufschaufeln ist dem Fachmann geläufig. Aus einer Verdichtersektion 102 der Gasturbine strömt verdichtete Luft in ein Brennkammerplenum 103 ein, das in einem Aussenmantel 104 der Gasturbine eingeschlossen ist. Die Luft strömt durch Brenner 105 in den Brennraum 5 der Gasturbine ein, der durch die Brennerhaube 106 vom Plenum getrennt ist. Beim Durchströmen des Brenners 105 erfährt die Luft typischerweise einen Druckverlust in einer Grössenordnung von 0,5 bis 1 bar. Im Brenner 105 wird die verdichtete Luft auf hier nicht dargestellte und an sich bekannte Art mit einer Brennstoffmenge vermischt, der im Brennraum 5 verbrannt wird. So erzeugtes Heissgas strömt schliesslich durch eine Turbinensektion 107 aus dem Brennraum 5 ab, und wird dabei unter Abgabe von mechanischer Leistung entspannt. Bei der Verbrennung auftretende Inhomogenitäten führen zu Druckpulsationen im Brennraum, welche unter ungünstigen Umständen kritische und die mechanische Integrität der Strukturen gefährdende Amplituden erreichen können. Aus diesem Grunde ist an der Brennkammer einer Gasturbine bevorzugt eine Messstelle vorzusehen, welche eine dauerhafte Beobachtung der Druckpulsationen erlaubt. In der Figur 2 ist dargestellt, wie eine erfindungsgemässe Sonde hierfür an einer Gasturbine angeordnet sein kann. Hierzu ist eine Öffnung in der Haube 106 vorgesehen. an dieser wird das messstellenseitige Ende 2 des Messrohres 1 der Sonde positioniert. Eine Durchführungsöffnung im Aussenmantel 104 der Gasturbine wird so gross gefertigt, dass sie auch das Mantelrohr 12 aufnehmen kann. Der Mantelraum ist zum Plenum offen. Aufgrund des Druckverlustes über den oder die Brenner ist der Druck im Mantelraum grösser als derjenige im Messrohr, wodurch eine Strömung von verdichteter Luft durch das semi-infinite Rohr in das Messrohr sichergestellt wird. Durch den Anschluss der Spülgasversorgung am Plenum ist die Spülgasversorgung inhärent sicher gestaltet: Solange die Gasturbine läuft, und Verbrennungsgase potentiell in das Messrohr eindringen und die Sensorik gefährden könnten, ist auch Spülgas vorhanden, welches eben dieses Eindringen von Heissgas verhindert.

In der Figur 1 ist der Einbau der Sonde in einer thermischen Maschine, wie beispielsweise einer Gasturbine, detaillierter dargestellt. Das Mantelrohr 12 ist an einem vorderen Ende mit einem Aussengewinde 15 versehen, mittels welchem es im Aussenmantel 104 eingeschraubt wird. Dabei wird das Mantelrohr im Aussenmantel so fest verschraubt, dass ein Dichtsitz 16 des Mantelrohres in Wirkverbindung mit einem Dichtring oder einer Dichtschnur 17 eine zuverlässige Abdichtung des Plenumsdruckes gegen den Aussendruck bewirkt. Zur Befestigung des Mantelrohres 12 am Aussenmantel 104 und zur Abdichtung können selbstverständlich auch andere, dem Fachmann geläufige Vorrichtungen, wie beispielsweise eine Flanschverbindung, Verwendung finden. Das Messrohr bildet mit einem Konussitz 4 ebenfalls einen gasdichten Abschluss an der Haube 106, und ist ansonsten mit dem messstellenseitigen Ende 2 durch die Haube 106 hindurchgeführt, und steht somit in Verbindung mit der Brennkammer 5. Auf einer messstellenabgewandten Stirnseite des Mantelrohres 12 ist eine Platte 18 montiert. Diese Platte 18 dient als erstes Widerlager für eine Druckfeder 19. Ein zweites Widerlager 20 für die Feder 19 ist fest mit dem Messrohr 1 verbunden und axialverschieblich im Mantelrohr 12 gelagert. Die Druckfeder 19 kann somit eine Axialkraft auf das Messrohr 1 ausüben. Die axialen Abmessungen sind derart gewählt, dass im eingebauten Zustand stets eine axiale Kraft auf das Messrohr ausgeübt wird, dergestalt, dass ein gasdichter Sitz des Konussitzes 4 gewährleistet wird. Daneben gewährleistet die federbelastete axialverschiebliche Lagerung des Messrohres im Mantelrohr eine Kompensation von Differenzdehnungen zwischen dem Aussenmantel 104 und der Haube 106 einerseits und dem Messrohr 1 und dem Mantelrohr 12 andererseits, wobei die Dichtheit des Konussitzes 4 an der Haube 106 gewährleistet ist. Die Platte 18 ist mit einer Öffnung versehen, deren Durchmesser grösser ist als derjenige des Messrohres. Damit wird eine Festlagerung des Messrohres im Mantelrohr vermieden. Andererseits kann auch zwischen dem axialverschieblichen Widerlager 20 und dem Mantelrohr kein gasdichter Sitz erreicht werden. Daher herrscht im Betrieb an der Durchführungsöffnung der Platte 18 noch Plenumsdruck, der gegen die Atmosphäre abzudichten ist, ohne die axiale Beweglichkeit zwischen Messrohr und Mantelrohr zu behindern. Hierzu schliesst sich an die Durchführungsbohrung gasdicht ein Faltenbalg 26 an, der an einem zweiten Ende an einer Muffe 21 ebenfalls gasdicht befestigt ist. Diese Muffe wiederum ist mit Mitteln 22 zur gasdichten Rohrverbindung versehen, beispielsweise einem Swagelock Anschluss, welcher gasdicht gegen das Messrohr abdichtet. Die Muffe 21 ist mit einem Schiebesitz in einer Hülse 23 axial verschieblich gelagert, und fixiert so das Messrohr nochmals radial. Die Hülse 23 ist über die Platte 18 fest mit dem Mantelrohr verbunden. Eine zweite Hülse 24 ist, ebenfalls axial verschieblich, über die Hülse 23 geführt. Diese Hülse stützt den Transmitter-Träger 25, in welchem einerseits der Transmitter 6 gehalten ist, und andererseits das Messrohr fest gelagert ist, radial ab. Die robuste radiale Abstützung des Messrohres an 3 Lagerstellen im hinteren Bereich und die Vorspannung durch die Feder im vorderen Bereich heben die Vibrations-Eigenfrequenz des an sich dünnen und weichen Messrohres an. Dies vermeidet einerseits Vibrationsschäden im Dauerbetrieb über mehrere 10⁴ Betriebsstunden; auf der anderen Seite werden potentiell die Messung verfälschende Vibrationen der gesamten Messvorrichtung mitsamt dem Transmitter weitestgehend vermieden.

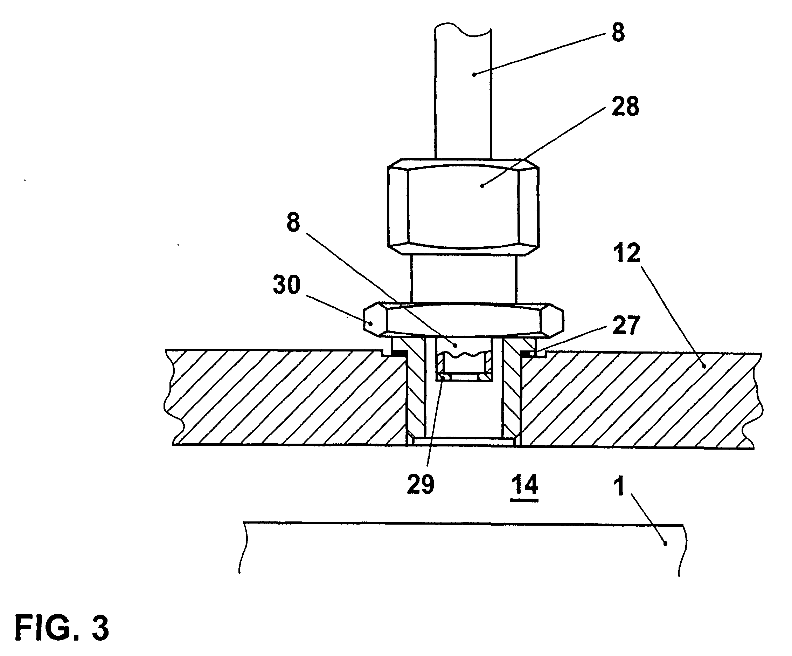

Selbstverständlich muss eine erfindungsgemässe Sonde nicht alle der im Ausführungsbeispiel gezeigten Merkmale aufweisen, oder kann auch andere, unterschiedliche oder zusätzliche, konstruktive Merkmale oder vorteilhafte Einzelheiten aufweisen, ohne vom Erfindungsgedanken abzuweichen. Ein solches Detail ist in Fig. 3 dargestellt. Diese zeigt als vergrössertes Detail den Anschluss des semi-infiniten Rohres an das Mantelrohr. In das Mantelrohr 12 ist ein Anschlusstutzen 30 eingeschraubt, wobei ein Dichtring 27 zwischen den Anschlusstutzen und das Mantelrohr gelegt ist. Das Rohr 8 ist in durch diesen Anschlussstutzen hindurchgeführt, und steht somit in Fluidverbindung mit dem Mantelraum 14. Die Mutter 28 ist über das Rohr 8 übergeworfen und auf den Anschlussstutzen 30 aufgeschraubt, um auf an sich bekannte und keineswegs erfindungsrelevante Weise an dieser Stelle eine gasdichte Verbindung herzustellen. Das Rohr 8 ist mittels einer Blende 29, welche beispielsweise aufgeschweisst ist, abgeschlossen. Bei geeigneter Auslegung des Durchmessers der Blende trägt diese zusätzlich zu einem echoarmen Abschluss des semi-infiniten Rohres bei; bevorzugt und besonders vorteilhaft wird der Blenden-Innendurchmesser im Bereich von 1,5 bis 2 mm gewählt. Weiterhin kann die Blende auch verwendet werden, um die Spülluftströmung einzustellen.

Weitere Ausführungsformen und Verwendungen der erfindungsgemässen Sonde werden sich dem Fachmann ohne weiteres eröffnen, ohne den beanspruchten Schutzbereich zu verlassen.

### Bezugszeichenliste

- 1: Messrohr
- 2: messstellenseitiges Ende des Messrohres
- 3: transmitterseitiges Ende des Messrohres
- 4: Konussitz
- 5: Messraum, Brennraum
- 6: Drucktransmitter
- 7: Signalkabel
- 8: semi-infinites Rohr
- 9: Wicklungsträger
- 10: Schutzmantel
- 11: zweites Ende des semi-infiniten Rohres
- 12: Mantelrohr
- 13: Isolation
- 14: Mantelraum
- 15: Aussengewinde
- 16: Dichtsitz
- 17: Dichtung
- 18: Platte
- 19: Druckfeder
- 20: Widerlager
- 21: Muffe
- 22: Mittel zur gasdichten Rohrverbindung
- 23: Hülse
- 24: Hülse
- 25: Transmitter-Träger
- 26: Faltenbalg
- 27: Dichtring
- 28: Überwurfmutter
- 29: Blende
- 30: Anschlusstutzen
- 101: Gasturbinen-Rotor
- 102: Verdichtersektion
- 103: Plenum
- 104: Aussenmantel
- 105: Brenner
- 106: Brennerhaube
- 107: Turbinensektion

## Patentansprüche

1. Sonde zur Messung von Druckschwingungen, welche Sonde die folgenden Elemente beinhaltet:
- ein inneres, als Messrohr fungierendes Rohr (1), welches ein messstellenseitiges Ende (2) und ein transmitterseitiges Ende (3) aufweist;
- ein Mantelrohr (12), welches wenigstens bereichsweise um das Messrohr (1) herum angeordnet ist, und wobei zwischen einer Aussenwand des Messrohres und einer Innenwand des Mantelrohres ein einseitig offener Mantelraum (14) ausgebildet ist;
- einen Drucktransmitter (6), welcher im Bereich des transmitterseitigen Endes des Messrohres mit dem Inneren des Messrohres in Verbindung steht;
- ein semi-infinites Rohr (8), welches an einem ersten Ende mit dem transmitterseitigen Ende (3) des Messrohres verbunden ist, und welches an einem zweiten Ende (11) mit dem Mantelraum verbunden ist;
wobei das semi-infinite Rohr als eine um das Messrohr und/oder das Mantelrohr angeordnete Wicklung ausgeführt ist.

2. Sonde nach Anspruch 1, wobei die Länge des semi-infiniten Rohres (8) mehr als 7000 Innendurchmesser des semi-infiniten Rohres beträgt.

3. Sonde nach einem der Ansprüche 1 oder 2, wobei das semi-infinite Rohr (8) eine Länge von mehr als 40 m aufweist.

4. Sonde nach einem der Ansprüche 1 bis 3, wobei das semi-infinite Rohr (8) den gleichen Innendurchmesser wie das Messrohr (1) aufweist.

5. Sonde nach einem der Ansprüche 1 bis 4, wobei der Innendurchmesser des Messrohres im Bereich von 4 bis 10 mm, insbesondere 6 mm, liegt.

6. Sonde nach einem der Ansprüche 1 bis 5, wobei am Übergang vom semi-infiniten Rohr (8) zum Mantelraum (14) eine Blende (29) angeordnet ist.

7. Sonde nach einem der Ansprüche 1 bis 6, wobei der Mantelraum mit einer Spülgasversorgung verbunden ist.

8. Sonde nach Anspruch 7, wobei die Temperatur des Spülgases beim Eintritt in das Messrohr (1) am transmitterseitigen Ende (3) des Messrohres 120°C bis 200°C, insbesondere 150°C bis 180°C, beträgt.

9. Verwendung einer Sonde nach einem der Ansprüche 1 bis 7 in einer Gasturbine, wobei das messstellenseitige Ende (2) des Messrohres (1) in eine Brennkammer (5) der Gasturbine offen ist.

10. Verwendung einer Sonde nach Anspruch 9, wobei der Mantelraum (14) mit einem Plenum (103) der Gasturbine in Verbindung steht.

## Claims

1. Probe for measuring pressure vibrations, which probe comprises the following elements:
- an internal tube (1), acting as a measuring tube, which has an end (2) on the measuring point side and an end (3) on the transmitter side;
- a casing tube (12), which is arranged around the measuring tube (1), at least in certain regions, and with a casing space (14), which is open on one side, being formed between an outer wall of the measuring tube and an inner wall of the casing tube;
- a pressure transmitter (6), which is in connection with the interior of the measuring tube in the region of the end of the measuring tube on the transmitter side;
- a semi-infinite tube (8), which is connected at a first end to the end (3) of the measuring tube on the transmitter side and is connected at a second end (11) to the casing space;
the semi-infinite tube being configured as a winding arranged around the measuring tube and/or the casing tube.

2. Probe according to Claim 1, the length of the semi-infinite tube (8) being over 7000 inside diameters of the semi-infinite tube.

3. Probe according to either of Claims 1 and 2, the semi-infinite tube (8) having a length of over 40 m.

4. Probe according to one of Claims 1 to 3, the semi-infinite tube (8) having the same inside diameter as the measuring tube (1).

5. Probe according to one of Claims 1 to 4, the inside diameter of the measuring tube lying in the range from 4 to 10 mm, in particular 6 mm.

6. Probe according to one of Claims 1 to 5, an orifice plate (29) being arranged at the transition from the semi-infinite tube (8) to the casing space (14).

7. Probe according to one of Claims 1 to 6, the casing space being connected to a purging gas supply.

8. Probe according to Claim 7, the temperature of the purging gas when it enters the measuring tube (1) at the end (3) of the measuring tube on the transmitter side being 120°C to 200°C, in particular 150°C to 180°C.

9. Use of a probe according to one of Claims 1 to 7 in a gas turbine, the end (2) of the measuring tube (1) on the measuring point side being open into a combustion chamber (5) of the gas turbine.

10. Use of a probe according to Claim 9, the casing space (14) being in connection with a plenum (103) of the gas turbine.

## Revendications

1. Sonde pour mesurer les oscillations de pression, laquelle sonde comprend les éléments suivants :
- un tube (1) interne faisant office de tube de mesure qui présente une extrémité côté point de mesure (2) et une extrémité côté transmetteur (3) ;
- un tube d'enveloppe (12) qui est disposé au moins sur une zone autour du tube de mesure (1) et un espace d'enveloppe (14) ouvert d'un côté étant formé entre une paroi extérieure du tube de mesure et une paroi intérieure du tube d'enveloppe ;
- un transmetteur de pression (6) qui se trouve en liaison avec l'intérieur du tube de mesure dans la zone de l'extrémité côté transmetteur du tube de mesure ;
- un tube semi-infini (8) dont une première extrémité est reliée à l'extrémité côté transmetteur (3) du tube de mesure et dont la deuxième extrémité (11) est reliée à l'espace d'enveloppe ;
le tube semi-infini étant réalisé sous la forme d'un enroulement disposé autour du tube de mesure et/ou du tube d'enveloppe.

2. Sonde selon la revendication 1, la longueur du tube semi-infini (8) étant égale à plus de 7000 fois le diamètre intérieur du tube semi-infini.

3. Sonde selon l'une des revendications 1 ou 2, le tube semi-infini (8) présentant une longueur de plus de 40 m.

4. Sonde selon l'une des revendications 1 à 3, le tube semi-infini (8) présentant le même diamètre intérieur que le tube de mesure (1).

5. Sonde selon l'une des revendications 1 à 4, le diamètre intérieur du tube de mesure étant compris entre 4 et 10 mm, notamment égal à 6 mm.

6. Sonde selon l'une des revendications 1 à 5, un obturateur (29) étant disposé au niveau de la transition entre le tube semi-infini (8) et l'espace d'enveloppe (14).

7. Sonde selon l'une des revendications 1 à 6, l'espace d'enveloppe étant relié à une source de gaz de rinçage.

8. Sonde selon la revendication 7, la température du gaz de rinçage lors de l'entrée dans le tube de mesure (1) à l'extrémité côté transmetteur (3) du tube de mesure étant comprise entre 120 °C et 200 °C, notamment entre 150 °C et 180 °C.

9. Utilisation d'une sonde selon l'une des revendications 1 à 7 dans une turbine à gaz, l'extrémité côté point de mesure (2) du tube de mesure (1) étant ouverte dans une chambre de combustion (5) de la turbine à gaz.

10. Utilisation d'une sonde selon la revendication 9, l'espace d'enveloppe (14) se trouvant en liaison avec une chambre d'accumulation (103) de la turbine à gaz.
